(19) Europäisches Patentamt
European Patent Office
Office européen des brevets

(11) **EP 1 059 515 B1**

(12) **EUROPÄISCHE PATENTSCHRIFT**

(45) Veröffentlichungstag und Bekanntmachung des Hinweises auf die Patenterteilung:
**27.08.2008  Patentblatt 2008/35**

(51) Int Cl.:
***G01F 1/84*** *(2006.01)*

(21) Anmeldenummer: **99110860.6**

(22) Anmeldetag: **07.06.1999**

(54) **Massedurchfluss-Messschaltung eines Coriolis-Massedurchfluss/Dichtemessers**

Mass flow rate measuring circuit for a Coriolis mass flow/density meter

Circuit pour mesurer le débit massique d'un débimètre/densimètre à effet Coriolis

(84) Benannte Vertragsstaaten:
**CH DE DK ES FR GB IT LI NL**

(43) Veröffentlichungstag der Anmeldung:
**13.12.2000  Patentblatt 2000/50**

(73) Patentinhaber: **Endress + Hauser Flowtec AG**
**4153 Reinach BL 1 (CH)**

(72) Erfinder:
• **Matt, Christian**
**4147 Aesch (BL) (CH)**

• **Kuttler, Daniel**
**79539 Lörrach (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
WO-A-88/02105          US-A- 4 911 006
US-A- 5 531 126

## Beschreibung

Die Erfindung betrifft eine Massedurchfluß-Meßschaltung eines Coriolis-Massedurchfluß/Dichtemessers.

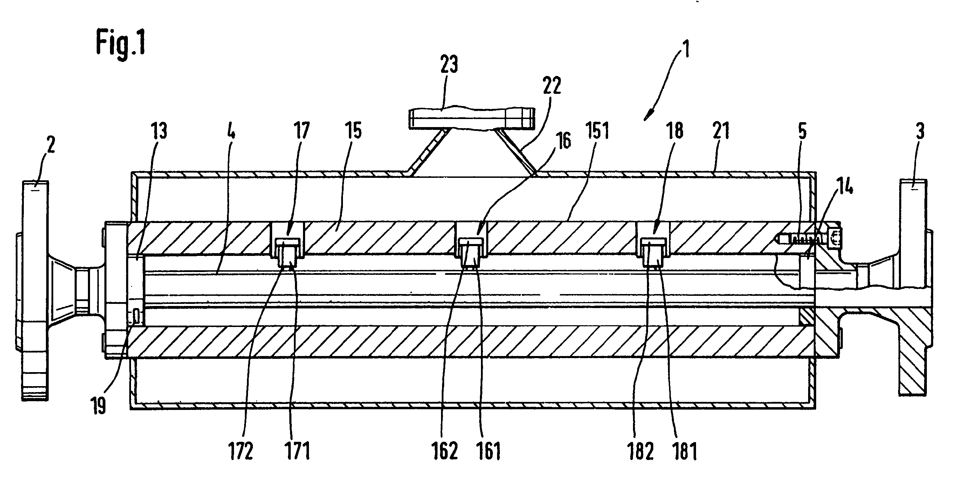

Hierzu dienen Coriolis-Massedurchfluß/Dichtemesser, die bekanntlich mindestens ein zu mechanischen Schwingungen erregtes, vom Fluid durchströmtes Meßrohr haben, das gebogen oder gerade sein kann; Einzelheiten hierzu sind unten in Zusammenhang mit der Erläuterung der Fig. 1 angegeben.

Üblicherweise sind mindestens ein Schwingungserreger sowie mindestens zwei Schwingungssensoren am Meßrohr, letztere in Strömungsrichtung beabstandet voneinander, angeordnet. Das Meßrohr schwingt meist mit einer von seinem Material und seinen Abmessungen vorgegebenen, jedoch von der Dichte des Fluids variierten mechanischen Resonanzfrequenz. In anderen Fällen liegt die Schwingfrequenz des Meßrohrs nicht genau bei dessen mechanischer Resonanzfrequenz, sondern in deren Nachbarschaft.

Die Schwingungssensoren geben sinus-oder impulsförmige Sensorsignale ab, deren Frequenz gleich der Schwingfrequenz des Meßrohrs ist und die zeitlich gegeneinander versetzt sind, also eine gegenseitige Phasenverschiebung aufweisen, wenn das Fluid im Meßrohr strömt. Daraus läßt sich ein Zeitdifferenz-Signal, z.B. zwischen Flanken der impulsförmigen Sensorsignale oder zwischen Nulldurchgängen der sinusförmigen Sensorsignale, ableiten, das direkt proportional zum Massedurchfluß ist.

In der US-A 49 11 006 ist eine Massedurchfluß-Meßschaltung eines Coriolis-Massedurchfluß/Dichtemessers mit einem Massedurchflußaufnehmer beschrieben, der zwei parallele, U-förmige, von einem zu messenden Fluid parallel durchströmte Meßrohre aufweist,

- die im Betrieb mit einer von ihrem Material und ihren Abmessungen vorgegebenen, jedoch von der Dichte des Fluids variierten Schwingfrequenz schwingen, die gleich der momentanen mechanischen Resonanzfrequenz der Meßrohre oder dieser benachbart ist und
- an denen ein erster und ein zweiter elektromagnetischer Schwingungssensor, in Strömungsrichtung beabstandet voneinander, die ein sinusförmiges erstes bzw. zweites Sensorsignal abgeben,
- sowie ein Schwingungserreger angeordnet sind,

welche Meßschaltung umfaßt:

- einen Kreuzschalter, von dem ein erster bzw. zweiter Eingang mit dem ersten bzw. zweiten Sensorsignal gespeist ist,
- eine von einem ersten bzw. zweiten Ausgang des Kreuzschalters eingangsseitig gespeiste, einen Ausgang aufweisende erste bzw. zweite Pufferschaltung,
- einen mit dem Ausgang der ersten bzw. zweiten Pufferschaltung eingangsseitig verbundenen, einen Ausgang aufweisenden ersten bzw. zweiten Nulldurchgang-Detektor,
- einen mit dem Ausgang des ersten bzw. zweiten Nulldurchgang-Detektors eingangsseitig verbundenen First-In-Time-Detektor,
- ein mit dem Ausgang des ersten bzw. zweiten Nulldurchgang-Detektors eingangsseitig verbundenes, einen Ausgang aufweisendes EXOR-Gatter,
- einen 50-MHz-Oszillator mit einem Ausgang,
- ein UND-Gatter, von dem

  -- ein erster Eingang am Ausgang des Oszillators und
  -- ein zweiter Eingang am Ausgang des EXOR-Gatters liegt, und

- einen Zähler mit einem Zählerstand-Ausgang und mit einem Zähleingang, der mit dem Ausgang des UND-Gatters verbunden ist, und
- einen Mikroprozessor, der aus dem Zählerstand ein den Massedurchfluß repräsentierendes Signal erzeugt.

Diese vorbeschriebene Meßschaltung ist praktisch nur für Massedurchflußaufnehmer mit den genannten U-förmigen, mit etwa 50 Hz bis 100 Hz schwingenden Meßrohren geeignet, wie auch der erwähnte 50-MHz-Oszillator zeigt. Die Periodendauer von dessen Schwingungen beträgt nämlich 20 ns; damit als Grundeinheit wird die Zeitdifferenz gemessen; die Auflösung dieser Messung beträgt daher ebenfalls 20 ns. Das ist für bei 50 Hz bis 100 Hz auftretende Zeitdifferenzen ausreichend.

Für Massedurchflußaufnehmer mit bei höheren Frequenzen schwingenden Meßrohren, wie dies insb. bei geraden Meßrohren der Fall ist - diese schwingen mit 800 Hz bis 1500 Hz - ist die vorbeschriebene Meßschaltung ungeeignet. Zwar könnte der Durchschnittsfachmann daran denken, einfach die Frequenz des 50-MHz-Oszillators entsprechend zu erhöhen, dies würde aber zu einer Frequenz in der Größenordnung von 1 GHz führen. Die Realisierung derartiger Oszillatoren bedingt aber eine mit der ansonsten niederfrequenten Schaltungstechnik nicht kompatible und daher zu vermeidende Höchstfrequenz-Schaltungstechnik.

Eine Aufgabe der Erfindung besteht daher darin, eine Massedurchfluß-Meßschaltung eines Coriolis-Massedurchfluß/Dichtemessers anzugeben, die auch für Massedurchflußaufnehmer mit Meßrohren geeignet ist, deren Schwingfrequenz in der Größenordnung von 1 kHz liegt. Ferner soll diese Meßschaltung im Hinblick auf die erforderliche Schaltungstechnik einfacher sein, insb. was den erwähnten First-In-Time Detektor betrifft.

Zur Lösung der Aufgabe besteht die Erfindung daher in einer Massedurchfluß-Meßschaltung eines Coriolis-Massedurchfluß/Dichtemessers mit einem Massedurchflußaufnehmer, der mindestens ein von einem zu messenden Fluid durchströmtes Meßrohr aufweist,

- das im Betrieb mit einer von seinem Material und seinen Abmessungen vorgegebenen, jedoch von der Dichte des Fluids variierten Schwingfrequenz schwingt, die gleich der momentanen mechanischen Resonanzfrequenz des Meßrohrs oder dieser benachbart ist,
- an dem ein erster und ein zweiter elektromagnetischer Schwingungssensor, in Strömungsrichtung beabstandet voneinander,

    -- die ein sinusförmiges erstes bzw. zweites Sensorsignal abgeben,

- sowie ein Schwingungserreger angeordnet sind und
- das von einem Tragrahmen oder einem Trägerrohr umgeben ist,

welche Meßschaltung umfaßt:

- einen mit dem ersten bzw. zweiten Sensorsignal eingangsseitig gespeisten, einen sehr hohen Eingangswiderstand, einen niederen Ausgangswiderstand und einen Ausgang aufweisenden ersten bzw. zweiten Impedanzwandler,
- einen Kreuzschalter, von dem

    -- ein erster bzw. zweiter Eingang mit dem Ausgang des ersten bzw. zweiten Impedanzwandlers verbunden ist,

- einen von einem ersten bzw. zweiten Ausgang des Kreuzschalters eingangsseitig gespeisten, einen sehr hohen Eingangswiderstand, einen niederen Ausgangswiderstand und einen Ausgang aufweisenden dritten bzw. vierten Impedanzwandler,
- einen mit dem Ausgang des dritten bzw. vierten Impedanzwandlers eingangsseitig verbundenen, einen Ausgang, einen Durchlaßbereich und eine obere Grenzfrequenz aufweisenden ersten bzw. zweiten Tiefpaß (37, 38), wobei

    -- die obere Grenzfrequenz des ersten Tiefpasses um etwa 10% bis 15% von der oberen Grenzfrequenz des zweiten Tiefpasses abweicht und
    -- in den Durchlaßbereich mindestens die auftretenden Werte der Schwingfrequenz fallen,

- einen vom Ausgang des ersten bzw. zweiten Tiefpasses eingangsseitig gespeisten, einen Ausgang aufweisenden ersten bzw. zweiten Nulldurchgang-Detektor und
- einen einen Start-Eingang, einen Stopp-Eingang und einen Ausgang aufweisenden Time-to-Digital-Converter,

    -- dessen Start-Eingang mit dem Ausgang des ersten Nulldurchgang-Detektors und
    -- dessen Stopp-Eingang mit dem Ausgang des zweiten Nulldurchgang-Detektors verbunden ist,

- einen hochfrequenten Taktgenerator, von dem ein Ausgang den Takt-Eingang des Time-to-Digital-Converters speist, und
- einen Mikroprozessor, der aus dem Digital-Signal und einem einen Kalibrierfaktor repräsentierenden Signal ein den Massedurchfluß repräsentierendes Signal erzeugt und das Hin- und Herschalten des Kreuzschalters steuert.

Ein Vorteil der Erfindung besteht darin, daß das erwähnte EXOR-Gatter und der erwähnte First-In-Time-Detektor durch die beiden Bandpässe ersetzt sind. Ein weiterer Vorteil besteht darin, daß das Problem der Erhöhung der Frequenz des erwähnten 50-MHz-Oszillators auf eine Frequenz in der Größenordnung von 1 GHz durch die Verwendung eines Time-To-Digital-Converters umgangen ist. Dieser hat bei einer Taktung mit z.B. 50 MHz eine Zeitauflösung von typischerweise 100 ps.

Die Erfindung und weitere Vorteile werden nun anhand von Ausführungsbeispielen näher erläutert, die in den Figuren der Zeichnung dargestellt sind.

Fig. 1    zeigt eine vertikale, teilweise geschnittene Längsansicht eines Massedurchflußaufnehmers eines Massedurchflußmessers mit einem Meßrohr, und

Fig. 2    zeigt nach Art eines Blockschaltbilds eine Meßschaltung entsprechend der Erfindung z.B. für den Massedurchflußmesser von Fig. 1.

In Fig. 1 ist in vertikaler, teilweise geschnittener Längsansicht ein Massedurchflußaufnehmer 1 eines für das Verfahren der Erfindung geeigneten Coriolis-Massedurchfluß/Dichtemessers gezeigt, der in den Verlauf einer von einem zu messenden flüssigen, gasförmigen oder dampfförmigen Fluid durchströmten - aus Gründen der Übersichtlichkeit jedoch nicht dargestellten - Rohrleitung eines gegebenen Durchmessers, z.B. über Flansche 2, 3, einzusetzen ist. Anstatt mittels Flanschen kann der Massedurchflußaufnehmer 1 an die erwähnte Rohrleitung auch durch anderer bekannte Mittel angeschlossen werden, wie z.B. mittels Triclamp-Anschlüssen oder Schraubverbindungen.

Der Massedurchflußaufnehmer 1 von Fig. 1 hat ein einziges gerades Meßrohr 4, dessen fluideinlaß-seitiges Ende am Flansch 2, z.B. über eine fluideinlaß-seitige Endplatte 13, und dessen fluidauslaß-seitiges Ende am Flansch 3, z.B. über eine fluidauslaß-seitige Endplatte 14, fixiert ist. In die Endplatten 13, 14 ist das Meßrohr 4 dicht, insb. vakuumdicht, eingepaßt, z.B. eingeschweißt, eingelötet oder eingewalzt, vgl. dazu die US-A 56 10 342.

Die Meßschaltung der Erfindung kann auch bei einem Clamp-On-Coriolis-Massedurchflußaufnehmer nach der älteren Anmeldung PCT/EP99/02134 oder bei einem Massedurchflußaufnehmer mit einem einzigen Meßrohr, das eine Auslegermasse aufweist, nach der EP-A 849 568 eingesetzt werden. Anstatt eines einzigen geraden Meßrohrs kann der Massedurchflußaufnehmer des Coriolis-Massedurchfluß/Dichtemessers auch ein einziges, in einer Ebene gebogenes Meßrohr, z.B. ein kreissektor-förmiges Meßrohr, aufweisen, wie es z.B. in der US-A 57 05 754 beschrieben ist.

Es sind aber auch mehrere, insb. zwei, gerade Meßrohre, wie in der US-A 47 93 191 beschrieben, oder mehrere, insb. zwei, gebogene Meßrohre, wie in der US-A 41 27 028 beschrieben, möglich.

Ferner kann die Meßschaltung der Erfindung auch bei einem Massedurchflußaufnehmer mit einem Meßrohr und einem Blindrohr verwendet werden, wie er in der US-A 55 31 126 beschrieben ist. Schließlich ist die Meßschaltung der Erfindung auch bei Massedurchfluß/Dichtemessern anwendbar, deren Massedurchflußaufnehmer mindestens ein schraubenförmiges Meßrohr entsprechend der US-A 55 57 973 oder der US-A 56 75 093 aufweisen.

In Fig. 1 sind die Flansche 2, 3 und die Endplatten 13, 14 an oder in einem Trägerrohr 15 befestigt, und zwar durch Schrauben, von denen eine Schraube 5 rechts oben im Schnitt vollständig zu sehen ist. Anstatt einer Schraubverbindung kann auch jede andere geeignete mechanische Fixierung von Trägerrohr 15 und Flanschen 2, 3 vorgesehen werden.

Die Endplatten 13, 14 können mit der Innenwand des Trägerrohrs 15 dicht, insb. vakuum-dicht, verschweißt oder verlötet sein. Es ist jedoch auch möglich, Trägerrohr 15 und Endplatten 13, 14 einstückig auszubilden. Anstatt des Trägerrohrs 15 kann auch ein Tragrahmen verwendet werden.

Als Mittel, die in Fig. 1 das Meßrohr 4 zu Schwingungen, insb. zu Resonanz-Schwingungen, bevorzugt zu Resonanz-Biegeschwingungen, anregen, dient ein in der Mitte zwischen den Flanschen 2, 3 und den Endplatten 13, 14 sowie im Zwischenraum zwischen dem Trägerrohr 15 und dem Meßrohr 4 angeordneter, z.B. elektromagnetischer, Schwingungserreger 16, der einen am Meßrohr 4 befestigten Dauermagneten 161 und eine am Trägerrohr 15 befestigte Spule 162 umfaßt, in die der Dauermagnet 161 eintaucht und in der dieser hin- und herbewegbar ist.

In Fig. 1 erregt der Schwingungserreger 16 das Meßrohr 4 zu Biegeschwingungen in der Zeichenebene, und in dieser Ebene treten daher auch bei strömendem Fluid Corioliskräfte auf, die eine Zeit- und eine Phasenverschiebung zwischen fluideinlaß-seitigen und fluidauslaß-seitigen Abschnitten des Meßrohrs 4 bewirken.

Ferner sind im Zwischenraum zwischen dem Meßrohr 4 und dem Trägerrohr 15 ein erster und ein zweiter Schwingungssensor 17, 18 für die Schwingungen des Meßrohrs 4 angeordnet. Der Schwingungssensor 17 bzw. 18 befindet sich zwischen der Endplatte 13 bzw. 14 und dem Schwingungserreger 16, bevorzugt im gleichen Abstand von diesem, also auch von der Mitte des Meßrohrs 4.

Die Schwingungssensoren 17, 18 sind in Fig. 1 elektromagnetische Schwingungssensoren, die einen am Meßrohr 4 befestigten Dauermagneten 171 bzw. 181 und eine am Trägerrohr 15 befestigte Spule 172 bzw. 182 umfassen, in die der Dauermagnet 171 bzw. 181 eintaucht und in der dieser hin- und herbewegbar ist. Am Schwingungssensor 17 bzw. 18 entsteht ein erstes bzw. zweites sinusförmiges Sensorsignal $x_{17}$ bzw. $x_{18}$.

An der Endplatte 13 ist ein Temperaturfühler 19 befestigt, der ein die momentane Temperatur des Meßrohrs 4 repräsentierendes Temperatur-Signal $x_{19}$ abgibt. Als Temperaturfühler wird bevorzugt ein Platinwiderstand benutzt, der, z.B. durch Kleben, an der Endplatte 13 befestigt ist. Ebenso kann am Trägerrohr 15 ein Temperaturfühler angebracht sein.

In Fig. 1 ist schließlich noch ein am Trägerrohr 15 fixiertes Gehäuse 21 gezeigt, das u.a. dem Schutz von Leitungen dient, die an den Schwingungserreger 16 und an die Schwingungssensoren 17, 18 angeschlossen, jedoch aus Gründen der Übersichtlichkeit nicht dargestellt sind.

Das Gehäuse 21 ist mit einem hals-artigen Übergangsstück 22 versehen, an dem ein nur teilweise gezeichnetes Elektronik-Gehäuse 23 zur Aufnahme einer Meß- und Betriebsschaltung des Massedurchfluß/Dichtemessers fixiert ist.

Für den Fall, daß das Übergangsstück 22 und das Elektronik-Gehäuse 23 das Schwingungsverhalten des Trägerrohrs 15 ungünstig beeinflussen sollten, können diese auch getrennt vom Massedurchflußaufnehmer 1 angeordnet werden. Dann besteht lediglich eine Leitungsverbindung zwischen der Elektronik und dem Massedurchflußaufnehmer 1.

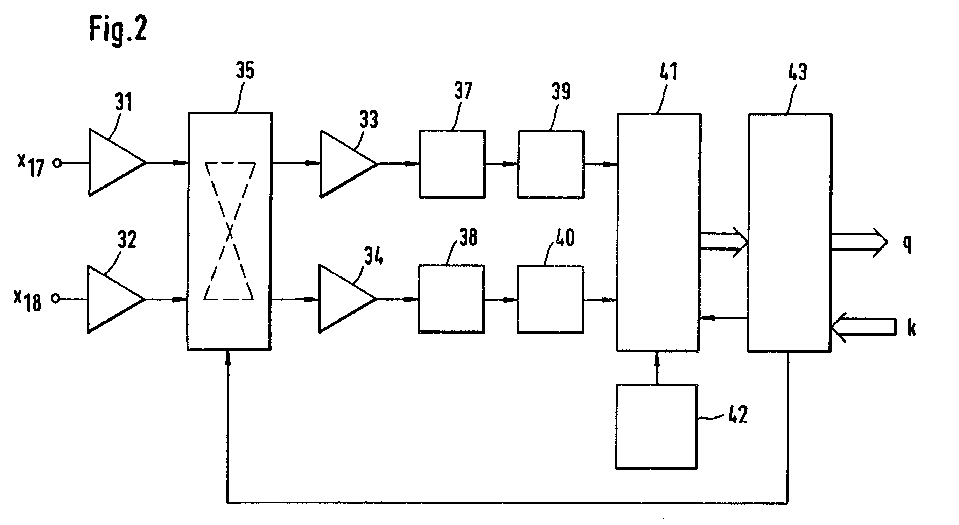

Die Fig. 2 zeigt nach Art eines Blockschaltbilds eine Meßschaltung entsprechend der Erfindung für Massedurchfluß/Dichtemesser mit den oben erwähnten verschiedenen Ausgestaltungen von Meßrohren. Die Meßschaltung umfaßt einen mit dem ersten Sensorsignal $x_{17}$ eingangsseitig gespeisten ersten Impedanzwandler 31. Ferner ist ein mit dem zweiten Sensorsignal $x_{18}$ eingangsseitig gespeister zweiter Impedanzwandler 32 vorhanden. Die beiden Impedanzwandler 31, 32 haben jeweils einen sehr hohen Eingangswiderstand, einen niederen Ausgangswiderstand und einen Ausgang.

Ein erster Eingang eines Kreuzschalters 35 ist mit dem Ausgang des Impedanzwandlers 31 und ein zweiter Eingang von ihm mit dem Ausgang des Impedanzwandlers 32 verbunden. Von einem ersten Ausgang des Kreuzschalters 35 ist eingangsseitig ein dritter Impedanzwandler 33 und von einem zweiten Ausgang des Kreuzschalters 35 ist eingangsseitig ein vierter Impedanzwandler 34 gespeist. Die beiden Impedanzwandler 33, 34 haben jeweils einen sehr hohen Eingangswiderstand, einen niederen Ausgangswiderstand und einen Ausgang.

Der Kreuzschalter 35 weist eine erste Schaltstellung auf, in der sein erster Eingang mit seinem ersten Ausgang und sein zweiter Eingang mit seinem zweiten Ausgang verbunden ist, und eine zweite Schaltstellung, in der sein erster Eingang mit seinem zweiten Ausgang und sein zweiter Eingang mit seinem ersten Ausgang verbunden ist.

Ein erster Tiefpaß 37 ist eingangsseitig mit dem Ausgang des Impedanzwandlers 33 und ein zweiter Tiefpaß 38 ist eingangsseitig mit dem Ausgang des Impedanzwandlers 34 verbunden. Die Tiefpässe 37, 38 haben jeweils einen Ausgang, eine obere Grenzfrequenz und einen Durchlaßbereich.

Die obere Grenzfrequenz des Tiefpasses 37 weicht um etwa 10% bis 15% von der oberen Grenzfrequenz des Tiefpasses 38, insb. nach oben, ab. In die Durchlaßbereiche beider Tiefpässe 37, 38 fallen mindestens die auftretenden Werte der Schwingfrequenz des Meßrohrs 4. Bei einem realisierten Massedurchflußmesser mit einem geraden Meßrohr, dessen Schwingfrequenz fluid- und dichte-abhängig zwischen 800 Hz und 1,3 kHz beträgt, liegen die obere Grenzfrequenz des Tiefpasses 37 bei 1,7 kHz und die obere Grenzfrequenz des Tiefpasses 38 bei 1,5 kHz und somit die entsprechenden Durchlaßbereiche zwischen 0 Hz und 1,7 kHz bzw. zwischen 0 Hz und 1,5 kHz.

Üblicherweise sind die Schaltstrecken des Kreuzschalters 35 mittels aktiver elektronischer Komponenten, wie z.B. Transistoren, insb. Isolierschicht-Feldeffekt-Transistoren, realisiert. Diese haben im leitend gesteuerten Zustand jeweils einen nicht vernachlässigbaren ON-Widerstand, dessen Widerstandswert von Schaltstrecke zu Schaltstrecke aufgrund von Fertigungsstreuungen variiert. Die beiden Impedanzwandler 33, 34 verhindern, daß diese ON-Widerstände sich zum Eingangswiderstand des Tiefpasses 37 bzw. 38 addieren.

Ein erster Nulldurchgang-Detektor 39 hat einen Ausgang und ist eingangsseitig vom Ausgang des Tiefpasses 37 gespeist. Ein zweiter Nulldurchgang-Detektor 40 hat einen Ausgang und ist eingangsseitig vom Ausgang Tiefpasses 38 gespeist.

Ein Start-Eingang eines Time-to-Digital-Converters 41 ist mit dem Ausgang des Nulldurchgang-Detektors 39 und ein Stopp-Eingang des Time-to-Digital-Converters 41 mit dem Ausgang des Nulldurchgang-Detektors 40 verbunden. Ein hochfrequenter Taktgenerator 42 speist über einen Ausgang einen Takt-Eingang des Time-to-Digital-Converters 41.

Ein Time-to-Digital-Converter ist eine einem Analog/Digital-Wandler vergleichbare Schaltung, die es gestattet, eine Zeitdifferenz (anstatt eines Analogsignals wie bei einem Analog/Digital-Wandler) mit sehr hoher Auflösung in ein Digitalsignal umzuwandeln. Auf dem Markt befinden sich Time-to-Digital-Converter z.B. unter der Bezeichnung TDC 10.000 (Hersteller: Siemens AG, München, DE) oder TDC-GP 1 (Hersteller: acam-messelectronic gmbh, Karlsruhe, DE). Für die Realisierung der Meßschaltung nach der Erfindung wird der TDC-GP 1 benutzt.

Da jedes Zeitmeßsystem nur positive Zeiten messen kann, ist bei der eingangs referierten Schaltung der erwähnte First-In-Time-Detektor vorgesehen, der ermittelt, welches Sensorsignal zeitlich früher auftritt. Bei der Erfindung braucht dies nicht ermittelt zu werden, da dafür gesorgt ist, daß am Start-Eingang des Time-to-Digital-Converters 41 immer ein Startsignal liegt, das zum zuerst auftretenden Sensorsignal gehört.

Dies wird durch die voneinander abweichende Bemessung der oberen Grenzfrequenzen der Tiefpässe 37, 38 erreicht. Diese Bemessung bedingt unterschiedliche Laufzeiten von Signalen, die die Tiefpässe verarbeiten, und somit eine Tiefpaß-Laufzeitdifferenz $\delta t_B$ zwischen dem Ausgangssignal des Tiefpasses 37 und dem Ausgangssignal des Tiefpasses 38.

Die Tiefpaß-Laufzeitdifferenz $\delta t_B$ ist so groß gewählt, daß bei allen zu erwartenden Phasenverschiebungen zwischen den Sensorsignalen $x_{17}$, $x_{18}$, insb. auch im Falle einer zu einer Vorzugs-Strömungsrichtung des Fluids entgegengesetzter Strömungsrichtung, das Signal am Start-Eingang des Time-to-Digital-Converters 41 immer das frühere ist.

Somit ergibt sich ein weiterer Vorteil der Erfindung: Dem Benutzer des Coriolis-Massedurchfluß/Dichtemessers braucht keine Strömungsrichtung vorgeschrieben zu werden, da er in beiden Strömungsrichtungen vorzeichen-behaftet und -richtig mißt.

In der Meßschaltung entsteht aber nicht nur die erwähnte Tiefpaß-Laufzeitdifferenz $\delta t_B$, sondern jedes Paar gleichartiger Teilschaltungen hat aufgrund von Exemplarstreuungen eine entsprechende Laufzeitdifferenz: Die Impedanzwandler 33, 34 haben eine Impedanzwandler-Laufzeitdifferenz $\delta t_R$ und die Nulldurchgangsdetektoren 39, 40 eine Nulldurchgangsdetektor-Laufzeitdifferenz $\delta t_N$.

Da die Sensorsignale ja eine durchfluß-abhängige Massedurchfluß-Laufzeitdifferenz $\delta t_Q$ aufweisen, tritt zwischen Start- und Stopp-Eingang des Time-to-Digital-Converters 41 eine Gesamt-Laufzeitdifferenz $\delta t_G$ auf:

$$\delta t_G = \delta t_B + \delta t_N + \delta t_R + \delta t_Q \qquad\qquad (1)$$

Aufgrund des Hin- und Herschaltens des Kreuzschalters 35 spaltet sich diese Gleichung in zwei Teil-Gleichungen für $\delta t_{G1}$ $\delta t_{G2}$ auf, so daß in der einen Schaltstellung gilt:

$$\delta t_{G1} = \delta t_B + \delta t_N + \delta t_R + \delta t_Q \qquad\qquad (2)$$

und in der anderen Schaltstellung gilt:

$$\delta t_{G2} = \delta t_B + \delta t_N + \delta t_R - \delta t_Q \qquad\qquad (3)$$

Das Minuszeichen bei $\delta t_Q$ in Gleichung (3) ergibt sich durch die Umschaltung des Kreuzschalters 35; die anderen drei Terme $\delta t_B$, $\delta t_N$, $\delta t_R$ ändern das Vorzeichen nicht, da sie von der Umschaltung nicht betroffen sind.

Um eine bei den Impedanzwandlern 31, 32 an sich mögliche Laufzeitdifferenz möglichst klein zu halten, werden hierfür entsprechend hergestellte Komponenten verwendet, wie z.B. die Operationsverstärker OP 275 der Fa. Analog Devices.

Ein Mikroprozessor 43 erzeugt aus dem Digitalsignal des Time-to-Digital-Converters 41 ein den Massedurchfluß repräsentierendes Signal q und steuert das Hin- und Herschalten des Kreuzschalters 35.

Dies geschieht wie folgt: Der Mikroprozessor 43 steuert den Kreuzschalter 35 für die Dauer einer vorgebbaren Anzahl N von am Digital-Ausgang des Time-to-Digital-Converters 41 aufeinanderfolgend auftretenden Digitalsignalen in die eine Schaltstellung. Dies möge für die Zwecke der Erläuterung diejenige sein, in der die obige Gleichung (2) gilt, also die Massedurchfluß-Laufzeitdifferenz $\delta_Q$ positiv ist. Der Mikroprozessor 43 akkumuliert die N Digitalsignale in einem ersten Akkumulier-Bereich, summiert die N Digitalsignale also auf.

Danach steuert der Mikroprozessor 43 den Kreuzschalter 35 für die Dauer von N weiteren am Digital-Ausgang des Time-to-Digital-Converters 41 aufeinanderfolgend auftretenden Digitalsignalen in die andere Schaltstellung. Nun gilt die obige Gleichung (3), in der die Massedurchfluß-Laufzeitdifferenz $\delta_Q$ negativ ist. Der Mikroprozessor 43 akkumuliert die N weiteren Digitalsignale in einem zweiten Akkumulier-Bereich, summiert also auch diese N Digitalsignale auf.

Danach wird das im zweiten Akkumulierbereich erreichte Summierergebnis von dem im ersten Akkumulierbereich erreichten Summierergebnis subtrahiert; es wird also die Differenz der Gleichungen (2) und (3) gebildet:

$$
\begin{aligned}
\delta t_{G1} - \delta t_{G2} &= \quad \delta t_B + \delta t_N + \delta t_R + \delta t_Q \\
&\quad - \delta t_B - \delta t_N - \delta t_R + \delta t_Q \\
\delta t_{G1} - \delta t_{G2} &= 2\delta t_Q \qquad\qquad\qquad (4)
\end{aligned}
$$

Das Subtraktionsergebnis wird dann noch durch 2N dividiert. Das Dividierergebnis wird mit einem dem Mikroprozessor 43 zugeführten, einen Kalibrierfaktor repräsentierenden Signal k multipliziert. Das Multiplizierergebnis ist ein den Massedurchfluß repräsentierendes Signal q, das einem Ausgang zugeführt ist.

Es ist noch darauf hinzuweisen, daß jeder Nulldurchgang-Detektor 37, 38 Ausgangssignale, insb. Ausgangsimpulse, erzeugt, und zwar sowohl wenn ein Nulldurchgang von positiven zu negativen Werten hin überschritten als auch wenn ein Nulldurchgang von negativen zu positiven Werten hin überschritten wird. Pro Periode einer Schwingung werden also von jedem Nulldurchgang-Detektor zwei Ausgangssignale erzeugt.

Der Mikroprozessor 43 steuert den Time-to-Digital-Converters 41 so an, daß von diesem entweder nur die Positiv-zu negativ-Nulldurchgänge oder die Negativ-zupostitiv-Nulldurchgänge oder beide Nulldurchgangsarten verarbeitet werden. In letzterem Falle muß N eine gerade Zahl sein.

**Patentansprüche**

1.  Massedurchfluß-Meßschaltung eines Coriolis-Massedurchfluß/Dichtemessers mit einem Massedurchflußaufnehmer (1), der mindestens ein von einem zu messenden Fluid durchströmtes Meßrohr (4) aufweist,

    - das im Betrieb mit einer von seinem Material und seinen Abmessungen vorgegebenen, jedoch von der Dichte des Fluids variierten Schwingfrequenz schwingt, die gleich der momentanen mechanischen Resonanzfrequenz des Meßrohrs oder dieser benachbart ist,
    - an dem ein erster und ein zweiter elektromagnetischer Schwingungssensor (17, 18), in Strömungsrichtung beabstandet voneinander,

        -- die ein sinusförmiges erstes bzw. zweites Sensorsignal ($x_{17}$, $x_{18}$) abgeben,

    - sowie ein Schwingungserreger (16) angeordnet sind und
    - das von einem Tragrahmen oder einem Trägerrohr (15) umgeben ist,

    welche Meßschaltung umfaßt:

    - einen mit dem ersten bzw. zweiten Sensorsignal ($x_{17}$, $x_{18}$) eingangsseitig gespeisten, einen sehr hohen Eingangswiderstand, einen niederen Ausgangswiderstand und einen Ausgang aufweisenden ersten bzw. zweiten Impedanzwandler (31, 32),
    - einen Kreuzschalter (35), von dem ein erster bzw. zweiter Eingang mit dem Ausgang des ersten bzw. zweiten Impedanzwandlers (31, 32) verbunden ist,
    - einen von einem ersten bzw. zweiten Ausgang des Kreuzschalters eingangsseitig gespeisten, einen sehr hohen Eingangswiderstand, einen niederen Ausgangswiderstand und einen Ausgang aufweisenden dritten bzw. vierten Impedanzwandler (33, 34),
    - einen mit dem Ausgang des dritten bzw. vierten Impedanzwandlers eingangsseitig verbundenen, einen Ausgang, einen Durchlaßbereich und eine obere Grenzfrequenz aufweisenden ersten bzw. zweiten Tiefpaß (37, 38), wobei

        -- die obere Grenzfrequenz des ersten Tiefpasses (37) um etwa 10% bis 15% von der oberen Grenzfrequenz des zweiten Tiefpasses (38) abweicht und
        -- in den Durchlaßbereich mindestens die auftretenden Werte der Schwingfrequenz fallen,

    - einen vom Ausgang des ersten bzw. zweiten Tiefpasses eingangsseitig gespeisten, einen Ausgang aufweisenden ersten bzw. zweiten Nulldurchgang-Detektor (39, 40),
    - einen einen Start-Eingang, einen Stopp-Eingang und einen Takt-Eingang aufweisenden, ein Digitalsignal erzeugenden Time-to-Digital-Converter (41),

        -- dessen Start-Eingang mit dem Ausgang des ersten Nulldurchgang-Detektors (39) und
        -- dessen Stopp-Eingang mit dem Ausgang des zweiten Nulldurchgang-Detektors (40) verbunden ist,

    - einen hochfrequenten Taktgenerator (42), von dem ein Ausgang den Takt-Eingang des Time-to-Digital-Converters (41) speist, und
    - einen Mikroprozessor (43), der aus dem Digitalsignal und einem einen Kalibrierfaktor repräsentierenden Signal (k) ein den Massedurchfluß repräsentierendes Signal (q) erzeugt und das Hin- und Herschalten des Kreuzschalters (35) steuert.

**Claims**

1.  Mass flow measuring circuit of a Coriolis mass flow/density meter with a mass flow sensor (1), which exhibits at least one measuring tube (4) through which a fluid to be measured flows

    - which vibrates during operation at a vibration frequency that is specified by the tube material and its dimensions but varies from the density of the fluid. This vibration frequency is the same as the current mechanical resonating frequency of the measuring tube or is close to it
- on which a primary and a secondary electromagnetic vibration sensor (17, 18) are mounted at a distance from each other in the direction of flow, these sensors emitting a sine-form primary and secondary sensor signal (x17, x 18)
- on which a vibration exciter (16) is also arranged
- which is surrounded by a support frame or a support pipe (15)

where the measuring circuit comprises:

- a primary or a secondary impedance converter (31, 32) which is fed the primary or secondary sensor signal (x17, x18) at the input and exhibits a very high input resistance, a low
output resistance and an output
- a cross switch (35) from which a primary or secondary input is connected to the output of the primary or secondary impedance converter (31, 32)
- a third or fourth impedance converter (33, 34) fed by a primary or secondary output of the cross switch on the input side and exhibiting a very high input resistance, a low output resistance and an output
- a primary or a secondary low pass (37, 38) connected to the output of the third or fourth impedance converter on the input side and exhibiting an output, a pass range and an upper limit frequency, where

-- the upper limit frequency of the first low pass (37) deviates between 10% and 15% from the upper limit frequency of the second low pass (38) and
-- the vibration frequency values occurring at least fall into the pass range

- a primary or secondary zero crossing detector (39,40) fed by the output of the first or second low pass on the input side and exhibiting an output
- a time-to-digital converter (41) exhibiting a start input, stop input and a pulse input and generating a digital signal

-- whose start input is connected to the output of the first zero crossing detector (39)
-- whose stop input is connected to the output of the second zero crossing detector (40)

- a high-frequency pulse generator (42) from which an output feeds the pulse input of the time-to-digital converter (41) and
- a microprocessor (43) that generates a signal (q) that represents the mass flow from the digital signal and a signal (k) representing a calibration factor and controls switching the cross switch (35) over and back.


## Revendications

1. Circuit de mesure de débit massique d'un débitmètre massique / densimètre Coriolis à l'aide d'un capteur de débit massique (1), qui présente au moins un tube de mesure (4) parcouru par un fluide à mesurer,

- qui, en fonctionnement, vibre à la fréquence de vibrations définie par son matériau et ses dimensions, variant cependant en fonction de la densité du fluide, laquelle fréquence est égale à la fréquence de résonance mécanique momentanée du tube de mesure, ou est proche de celle-ci,
- sur lequel sont disposés un premier et un deuxième capteur de vibrations électromagnétiques (17, 18), espacés l'un par rapport à l'autre dans le sens de l'écoulement,

-- qui délivrent respectivement un premier et un deuxième signal de capteur sinusoïdal ($x_{17}$, $x_{18}$),

- ainsi qu'un excitateur de vibrations (16), et
- qui est entouré d'un cadre porteur ou d'un tube-support (15),

circuit de mesure comportant :

- un premier ou un deuxième convertisseur d'impédance (31, 32), alimenté côté entrée avec le premier ou le deuxième signal de capteur ($x_{17}$, $x_{18}$), présentant un résistance d'entrée très élevée, une résistance de sortie très faible et une sortie,

- un interrupteur va-et-vient (35), dont respectivement une première et une deuxième entrée sont reliées avec la sortie du premier et du deuxième convertisseur d'impédance (31, 32),

- un troisième ou un quatrième convertisseur d'impédance (33, 34), alimenté côté entrée avec la première ou la deuxième sortie de l'interrupteur va-et-vient, présentant une résistance d'entrée très élevée, une résistance de sortie très faible et une sortie,

- un premier ou un deuxième filtre passe-bas (37, 38) relié côté entrée avec la sortie du troisième ou du quatrième convertisseur d'impédance, présentant une sortie, une bande passante et une fréquence de coupure supérieure, pour lequel

    -- la fréquence de coupure supérieure du premier filtre passe-bas (37) est différente d'env. 10 à 15 % de la fréquence de coupure supérieure du deuxième filtre passe-bas (38) et

    -- au moins les valeurs produites à la fréquence de vibrations tombent dans la bande passante,

- un premier ou un deuxième détecteur de passage par zéro (39, 40), alimenté côté entrée par la sortie du premier ou du deuxième filtre passe-bas, présentant une sortie,

- un convertisseur temps-numérique (41) générant un signal numérique, présentant une entrée de démarrage, une entrée d'arrêt et une entrée d'impulsions,

    -- dont l'entrée de démarrage est reliée avec la sortie du premier détecteur de passage par zéro (39) et

    -- dont l'entrée d'arrêt est reliée avec la sortie du deuxième détecteur de passage par zéro (40),

- un générateur d'impulsions haute fréquence (42), dont une sortie alimente l'entrée d'impulsions du convertisseur temps-numérique (41), et

- un microprocesseur (43), qui génère un signal (q) représentant le débit massique, à partir du signal numérique et d'un signal (k) représentant un facteur d'étalonnage, et qui pilote la commande va-et-vient de l'interrupteur va-et-vient (35).

**Fig.1**

EP 1 059 515 B1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4911006 A
- US 5610342 A
- EP 9902134 W
- EP 849568 A
- US 5705754 A
- US 4793191 A
- US 4127028 A
- US 5531126 A
- US 5557973 A
- US 5675093 A